# EUROPEAN PATENT APPLICATION

(11) **EP 0 926 864 A2**
(43) Date of publication of application: **30.06.1999**
(21) Application number: 98123658.1
(22) Date of filing: 11.12.1998
(51) Int. Cl.: H04M 1/57

(54) **Telephone caller identification system and method with differentiated caller name feature**

(30) Priority: 24.12.1997 US 998327
(71) Applicant: Ericsson Inc., Research Triangle Park, N.C. 27709 (US)
(72) Inventor: Tovander, Lars A., Plano, Texas 75023 (US)
(74) Representative: Lind, Robert

(57) **Abstract**

A telephone caller identification system uses a caller code to distinguish between multiple callers from a single calling telephone. At the calling telephone, the caller enters a caller code along with the telephone number of the telephone to be called. The telephone caller identification system uses the caller code to identify the specific caller who placed the call.

## Description

### BACKGROUND OF THE PRESENT INVENTION

### Field of the Invention

The present invention relates generally to a telephone caller identification system and, more particularly, to a telephone caller identification system capable of distinguishing between different callers who place calls from the same telephone.

### Background and Objects of the Present Invention

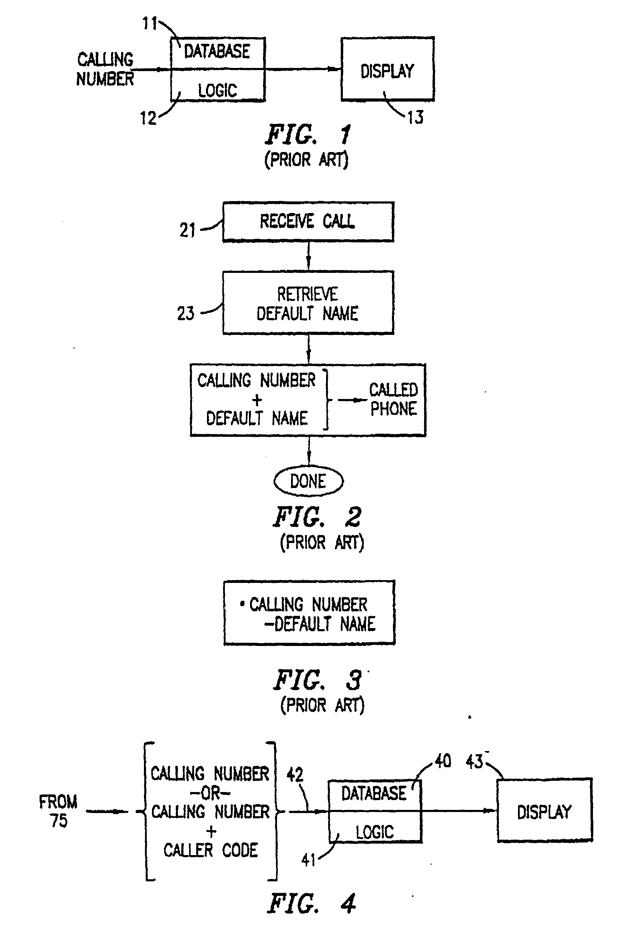

FIGURE 1 illustrates diagrammatically the caller identification arrangement in a conventional telephone system. When a call is placed, the calling number (the identification code associated with the caller's telephone) is either determined from a database in the telephone system, or is sent by the caller's telephone. The calling number is passed to a database 11 and logic 12 in a telephone exchange connected between the calling and receiving telephones. The database and logic section locates the caller identification information in the. database 11, and passes this information to the display 13 at the receiving (or called) telephone. Thus, the receiving party has an indication as to the identity of the calling party.

FIGURE 3 illustrates an example entry in the database 11 of FIGURE 1. As shown in FIGURE 3, each calling number has associated therewith a default name which is displayed whenever that calling number is received. This is illustrated in FIGURE 2. The call is received at 21, and the default name is retrieved and displayed at 31. Thus, the database 11 of FIGURE 1 and FIGURE 3 provides only a single default name for each calling number contained therein. Therefore, any time that a call is received from a given telephone service location, the calling number and the default name will be displayed at 13 in FIGURE 1, regardless of who made the call. If John Smith is the name associated with a given calling number in the database of FIGURE 1, then the name John Smith will be displayed at 13 even if the call is made by John's wife, Jane Smith. The system of FIGURES 1-3 is designed simply to display the default name of John Smith regardless of who the caller actually is.

Note that a given telephone service location might have plural telephones, but still only one calling number. Such a group of telephones having the same calling number are herein considered collectively to be the same telephone.

It is desirable in view of the foregoing to provide a telephone caller identification system which is capable of distinguishing between the identities of different calling parties, even when the different calling parties place their calls from the same calling telephone.

### SUMMARY OF THE INVENTION

The present invention provides a telephone caller identification system and method which can distinguish between the identities of different calling parties, even when the calling parties place their calls from the same calling telephone.

### BRIEF DESCRIPTION OF THE DRAWINGS

FIGURE 1 is a block diagram of a conventional telephone caller identification system.

FIGURE 2 illustrates the caller identification process performed by the conventional system of FIGURE 1.

FIGURE 3 illustrates an exemplary entry from the conventional database of FIGURE 1.

FIGURE 4 is a block diagram of a caller identification system according to the present invention.

FIGURE 5 illustrates the operation of the caller identification system of FIGURE 4.

FIGURE 6 illustrates an example entry from the database of FIGURE 4.

FIGURE 7 is a block diagram of a portion of a telephone exchange according to the present invention.

FIGURE 8 illustrates the operation at the FIGURE 7 structure.

### DETAILED DESCRIPTION

Example FIGURE 4 is a block diagram of a caller identification system according to the present invention. When the system receives at input 42 information from the calling telephone, the information is passed to a database (or memory) 40 and logic 41 in a telephone exchange coupled between the calling and called telephones. The database and logic section uses the information from the calling telephone to locate the caller identification information in the database 41. This information is then passed to display 43 at the called telephone for use by the receiving party.

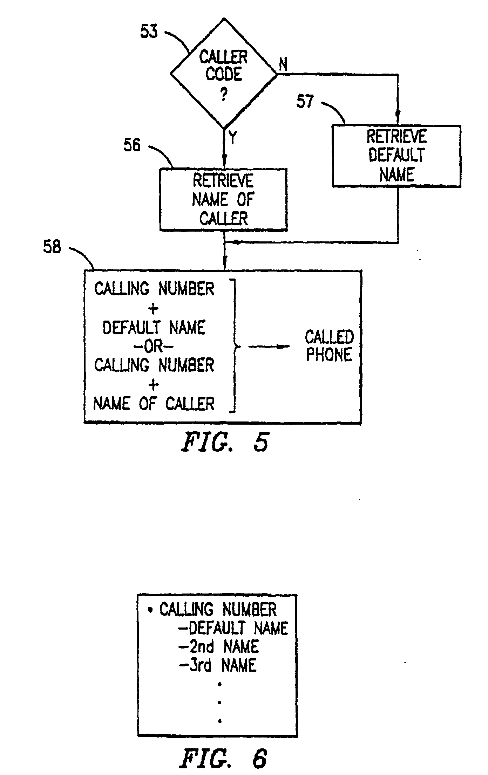

FIGURE 6 illustrates an example entry in the database of FIGURE 4. Each calling number in the database may have associated therewith a plurality of caller names, including the default name of FIGURE 3, for example, the person who owns the phone number (has contracted for the phone service) of the calling telephone. The second and third names shown in FIGURE 6 can be, for example, other people who reside in a household where the calling telephone is located, or persona who frequently place calls from a given telephone, such as employees who frequently call from a business telephone. With the exception of the entry format shown in FIGURE 6, the database 40 can otherwise be implemented in the same way as the conventional database 11 of FIGURE 1. The database 40 can be located at the telephone exchange itself, or can be located in the telephone network externally of the exchange.

The operation of the caller identification system in FIGURE 4 is described in more detail below. Before that, however, is described the manner in which a calling party can use a calling telephone to trigger the caller identification features of the invention.

In order to identify himself or herself, the caller enters into the calling telephone a service code followed by a caller code that identifies the caller, and thereafter enters the telephone number of the telephone to be called. An example of this sequence is as follows:
*43*3# 7654321.

The numbers "43" between the "star" characters (*) represent the service code. The "3" entry is the caller code entry, and the seven characters following the "#" entry constitute the called number (the number of the telephone to be called).

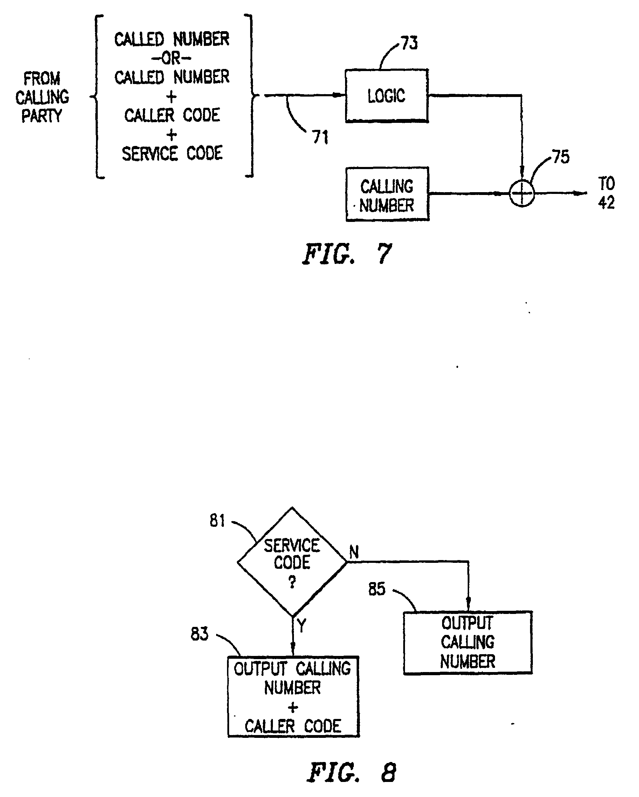

Example FIGURE 7 illustrates a pertinent portion of a telephone exchange with which the above sequence may be used. The telephone exchange receives at input 71 either the called number or the called number plus the caller code plus the service code arranged as set forth above. The logic circuitry at 73 recognizes the service code and caller code, and adds the caller code to the calling number (which calling number is obtained by one of the aforementioned conventional methods) at combining circuit 75, so that the database 40 and logic 41 can receive at 42 (see also FIGURE 4) the calling number plus the caller code. If a service code and caller code do not accompany the called number at 71, then only the calling number alone is provided at 42, as is conventional (see FIGURE 1).

The operation of FIGURE 7 is illustrated in example FIGURE 8. If a service code is detected at 81, then the ealling number plus the caller code are output at 83. If no service code is detected, then only the calling number is output at 85.

Referring again to FIGURE 4, either the calling number or the calling number plus the caller code is received from combining circuit 75 at the input 42 of the database and logic section. The logic 41 and database 40 then operate as described below with respect to example FIGURE 5.

At 53 in FIGURE 5, the logic of FIGURE 4 determines whether or not a caller code accompanies the calling number. If so, then the logic of FIGURE 4 retrieves at 56 the name of the caller, that is, the name corresponding to the received caller code. If the logic 41 does not detect a caller code at 53, then the default name of FIGURE 6 is retrieved at 57. Logic 41 and database 40 use the calling number to locate the corresponding database entry, as is conventional. The caller code, if present, is used to select the corresponding name from the plurality of names in the selected database entry.

At 58 in FIGURE 8, the calling number is passed to the called telephone along with either the default name or the name selected by the caller code. This information can then be displayed by display 43 at the called telephone. The display 43 can be the same as display 13 of FIGURE 1.

The present invention thus provides a caller identification system which, when the caller enters a caller code along with the called number, can distinguish between multiple callers from a single calling telephone.

It will be clear to workers in the art that the logic circuits at 41 and 73, as described with respect to FIGURES 4, 5, and 7, can be readily implemented in hardware or software in the data processing portion of a conventional telephone exchange. It will also be clear that the invention is applicable to various telephone systems including for example, POTS (plain old telephone service), ISDN (integrated services digital network) and PLMN (public land mobile network).

The previous description is of preferred embodiments for implementing the invention, and the scope of the invention should not be limited by this description. The scope of the present invention is instead defined by the following claims.

## Claims

1. A telephone caller identification system, comprising:
an input to receive an input signal;
a database coupled to said input and having stored therein a plurality of entries which respectively correspond to a plurality of telephones, said database responsive to said input signal to provide access to one of said entries; and
said one entry including information indicative of a plurality of possible identities of a caller who originated said input signal.

2. The system of Claim 1, wherein said database is responsive to a first code in said input signal to select said one entry, and is responsive to a second code in said input signal to select one of said plurality of possible caller identities.

3. The system of Claim 2, including a display coupled to an output of said database to display said one identity.

4. A telephone caller identification system, comprising:
an input for receiving from a telephone of a calling party information identifying a telephone to be called; and
a detect circuit connected to said input to detect at said input a caller code provided by the calling party to identify the calling party.

5. The system of Claim 4, including a combining circuit coupled to said detect circuit for combining said caller code with a calling number associated with the telephone of the calling party, and for transmitting said caller code and said calling number to the telephone to be called.

6. A method for a calling party to place a call from a first telephone to a second telephone, comprising:
manually entering into the first telephone a first code to identify the second telephone; and
manually entering into the first telephone a second code with which a telephone exchange coupled between the first and second telephones can identify the calling party.

7. The method of Claim 6, including transmitting the second code to the telephone exchange.

8. The method of Claim 7, including using the second code in the telephone exchange to identify the calling party.

9. The method of Claim 8, including using the second code in the telephone exchange to select the calling party from a list in a memory.

10. The method of Claim 6, including manually entering into the first telephone a service code for indicating to the telephone exchange that the second code has been manually entered.

11. A method of receiving a telephone call originated by a calling party, comprising:
obtaining a first code that identifies the telephone from which the call was placed; and
receiving a second code with which to identify the calling party that originated the call.

12. The method of Claim 11, including using the first code to select an entry from among a plurality of entries stored in a memory.

13. The method of Claim 12, including using the second code to select a calling party from among a plurality of calling parties stored at the selected entry in the memory.

14. A method of using a telephone exchange to process a telephone call placed from a telephone by a calling party, comprising:
obtaining at the telephone exchange a code that identifies the telephone; and
using the telephone exchange to identify the calling party from a list that includes a plurality of possible calling parties associated with the telephone as identified by the code.

15. The method of Claim 14, wherein said using step includes selecting the list in response to the code.

16. The method of Claim 15, wherein said using step includes receiving at the telephone exchange a second code and using the second code to select the calling party from the list.

17. A method for permitting identification of a calling party placing a telephone call from a calling telephone, comprising:
obtaining at a telephone exchange a first code that identifies the calling telephone; and
sending to the telephone exchange a second code with which the telephone exchange can identify the calling party.

18. A method of processing a telephone call originated by a calling party, comprising:
receiving from the calling party a manual input including a telephone number that identifies a telephone to be called; and
detecting in the manual input from the calling party a caller code with which a telephone exchange can identify the calling party.

19. The method of Claim 18, wherein said detecting step includes recognizing in the manual input a service code which indicates that the caller code is present in the manual input.

20. The method of Claim 18, including combining the caller code with a calling number that identifies a telephone from which the telephone call is being placed.
